(19)

Europäisches Patentamt
European Patent Office
Office européen des brevets

(11) **EP 4 489 112 A1**

(12) **EUROPEAN PATENT APPLICATION**
published in accordance with Art. 153(4) EPC

(43) Date of publication:
**08.01.2025 Bulletin 2025/02**

(21) Application number: **22933961.9**

(22) Date of filing: **28.03.2022**

(51) International Patent Classification (IPC):
$H01M\ 4/36^{(2006.01)}$     $H01M\ 4/38^{(2006.01)}$
$H01M\ 4/583^{(2010.01)}$     $H01M\ 10/0525^{(2010.01)}$

(52) Cooperative Patent Classification (CPC):
**H01M 4/36; H01M 4/38; H01M 4/583;**
**H01M 10/0525;** Y02E 60/10

(86) International application number:
**PCT/CN2022/083471**

(87) International publication number:
**WO 2023/184104 (05.10.2023 Gazette 2023/40)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventors:
• **YI, Zheng**
  **Ningde, Fujian 352100 (CN)**
• **ZHENG, Zigui**
  **Ningde, Fujian 352100 (CN)**
• **XIE, Yuansen**
  **Ningde, Fujian 352100 (CN)**

(74) Representative: **Klunker IP**
**Patentanwälte PartG mbB**
**Destouchesstraße 68**
**80796 München (DE)**

(54) **NEGATIVE ELECTRODE ACTIVE MATERIAL, NEGATIVE ELECTRODE SHEET, ELECTROCHEMICAL APPARATUS AND ELECTRONIC APPARATUS**

(57) A negative electrode active material has a core-shell structure. The negative electrode active material includes a first shell and at least two core material particles located in the first shell. The core material includes hard carbon. The first shell includes a first shell material with a volumetric specific capacity of 800mAh/cm$^3$ or more.

**FIG. 1**

Description

TECHNICAL FIELD

This application belongs to the electrochemical technical field, and particularly relates to a negative electrode active material, a negative electrode plate, an electrochemical apparatus, and an electronic apparatus.

BACKGROUND

Due to the advantages of a high energy density, a high working voltage, a long cycle life, a small size, a light weight, environmental friendliness, and the like, lithium ion batteries are widely applied to fields such as electric automobiles, movable electronic devices, and the like. With the continuous development of electric automobiles and movable electronic devices, requirements on energy density, safety performance, and cycle performance of the lithium ion batteries are increasingly high. Therefore, to provide a lithium ion battery with comprehensively improved overall performance is the technical problem to be solved currently.

SUMMARY

An object of this application is to provide a negative electrode active material, a negative electrode plate, an electrochemical apparatus, and an electronic apparatus, so that the electrochemical apparatus has low self-discharge, a high volume energy density, good cycle performance, and storage performance.

A first aspect of this application provides a negative electrode active material, having a core-shell structure, where the negative electrode active material includes a first shell and at least two core material materials located in the first shell; the core material includes hard carbon; and the first shell includes a first shell material with a volumetric specific capacity of 800 mAh/cm$^3$ or more.

It is proved by the applicant through a great number of studies and practices that the negative electrode active material provided by this application can have relatively high compaction density and first coulombic efficiency. The negative electrode plate and the electrochemical apparatus using the negative electrode active material can have good production and processing performance, and the electrochemical apparatus using the negative electrode active material can have low self-discharge, high volume energy density, and good cycle performance and storage performance.

In some implementations, the first shell includes a first element capable of forming an alloy with Li, the first element including at least one of Sn, Si, Sb, and Ge. The first element can form the alloy with Li, so that the volume of the negative electrode active material and the volume energy density of the electrochemical apparatus can be improved.

In some implementations, based on the total mass of the negative electrode active material, the mass percentage of the first element is 2-20%, optionally 2-10%. In a case that the content of the first element is within an appropriate range, the negative electrode active material can have a relatively less volume effect while having a relatively high capacity, so that the electrochemical apparatus using the negative electrode active material can have low self-discharge, high volume energy density, and good cycle performance and storage performance.

In some implementations, the first shell material includes at least one of a simple substance or a compound including the first element. Optionally, the first shell material includes at least one of a single substance stannum, $SnO_x$, a stannum alloy, a single substance silicon, $SiO_y$, a silicon alloy, a single substance antimony, and a single substance germanium, where $0<x\leq2$ and $0<y\leq1.5$.

In some implementations, a volumetric particle size Dv50 of the first shell material is 60-500 nm, optionally 60-100 nm.

In a case that the volumetric particle size Dv50 of the first shell material is within an appropriate range, the negative electrode active material can have a relatively less volume effect while having a relatively high capacity, so that the electrochemical apparatus using the negative electrode active material can have low self-discharge, high volume energy density, and good cycle performance and storage performance.

In some implementations, the first shell further includes a first conductive carbon material.

In some implementations, the first conductive carbon material and the first shell material are uniformly mixed in the first shell.

In some implementations, the first conductive carbon material is located on a surface of the first shell material. In this case, the first shell material will be restrained by the first conductive carbon material during volume expansion in a charging process, so that the first shell can have a less volume effect as a whole, and therefore, the probability that the negative electrode active material provided by this application is pulverized and falls from the current collector is less, and the cycle performance and the storage performance of the electrochemical apparatus can be further improved.

In some implementations, the first conductive carbon material includes at least one of amorphous carbon, a carbon nanotube, graphene, and vapor deposited carbon.

In some implementations, based on the total mass of the negative electrode active material, the mass percentage of the first conductive carbon material is 0.5-20%. The content of the first conductive carbon material should not be too high. When the content of the first conductive carbon material is relatively high, the content of the first shell material is relatively lowered, which is harmful to exerting the advantage of a high volume of the first shell material.

In some implementations, the negative electrode active material further includes a second shell located on the surface of the first shell, the second shell including a second conductive carbon material. In a case that the negative electrode active material further includes the second shell, the first shell material can be prevented from being exposed, and the volume expansion of the first shell material is further reduced. Therefore, the probability that the negative electrode active material provided by this application is pulverized and falls from the current collector is less.

In some implementations, the thickness of the second shell is 1-10 nm. In a case that the thickness of the second shell is within an appropriate range, the negative electrode active material can have a relatively less volume effect while having a relatively high capacity, so that the electrochemical apparatus using the negative electrode active material can have low self-discharge, high volume energy density, and good cycle performance and storage performance.

In some implementations, the second conductive carbon material includes at least one of amorphous carbon, a carbon nanotube, graphene, and vapor deposited carbon.

In some implementations, based on the total mass of the negative electrode active material, the mass percentage of the second conductive carbon material is 1-30%. The content of the second conductive carbon material should not be too high. When the content of the second conductive carbon material is relatively high, the volume exertion of the negative electrode active material as a whole may be affected, which is harmful to exerting the advantage of the high volume of the first shell material.

In some implementations, a quantity of the core material is greater than or equal to 3, optionally 3-10. In a case that the quantity of the core material is within an appropriate range, an appropriate void structure can be formed, which is beneficial to buffering stress generated in a volume change process of the first shell.

In some implementations, the pellet density of the core material under a pressure of 5 tons is 0.9-1.2 $g/cm^3$.

In some implementations, Moh's hardness of the core material is greater than 2.

In some implementations, the core material has a sharp edge angle.

In some implementations, the volumetric particle size Dv50 of the negative electrode active material is 2-15 $\mu$m.

In some implementations, the volumetric particle size Dv99 of the negative electrode active material is 10-45 $\mu$m.

In some implementations, a first reversible specific capacity of the negative electrode active material at 0-2.0 V is 300-1200 mAh/g.

In some implementations, based on the total mass of the negative electrode active material, the mass percentage of the carbon element is 30-98%, optionally 60-98%.

A second aspect of this application provides a negative electrode plate, including a negative electrode current collector and a negative electrode film, where the negative electrode film comprises the negative electrode active material in the first aspect of this application.

In some implementations, an adhesive force between the negative electrode film and the negative electrode current collector is 9-30 N/m, and a cohesive force of the negative electrode film is 40-100 N/m.

A third aspect of this application provides an electrochemical apparatus, including the negative electrode plate in the second aspect of this application.

In some implementations, a K value of the electrochemical apparatus is 0.01-2 mV/h, optionally 0.01-1.4 mV/h.

A fourth aspect of this application provides an electronic apparatus, including the electrochemical apparatus in the third aspect of this application.

The negative electrode active material provided by this application can have relatively high compaction density and good production and processing performance. The electrochemical apparatus and the electronic apparatus using the negative electrode active material can have low self-discharge, high volume energy density, and good cycle performance and storage performance.

## BRIEF DESCRIPTION OF THE DRAWINGS

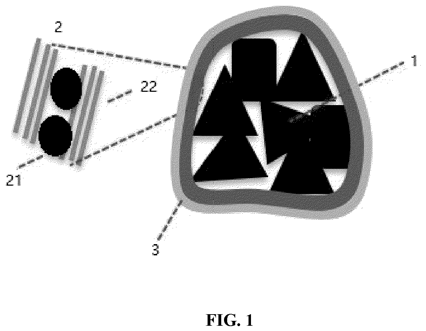

FIG. 1 is a structural schematic diagram of a negative electrode active material provided by this application.

## DETAILED DESCRIPTION OF THE EMBODIMENTS

To make the objects, technical solutions, and advantages of the embodiments of this application clearer, the following clearly and completely describes the technical solutions in the embodiments of this application with reference to the drawings in the embodiments of this application. Apparently, the described embodiments are merely some embodiments of this application rather than all of the embodiments. Related embodiments described here are illustrative and are used to provide a basic understanding of this application. The embodiments of this application shall not be construed as limitations to this application. On the basis of the technical solutions and embodiments provided in this application, all other embodiments obtained by those skilled in the art without creative efforts fall into the scope of protection of this application.

For briefness, some numerical value ranges are specifically disclosed herein. However, any lower limit can be combined with any upper limit to form ranges not explicitly recorded; and any lower limit can be combined with other upper limits to form ranges not explicitly recorded, and similarly, any upper limit can be combined with any other upper limits to form ranges not explicitly recorded. Besides, each independently disclosed point or single numerical value itself can be taken as the lower limit or the upper limit to be combined with any other points or single numerical value or to be combined with other lower limits and upper limits to form ranges not explicitly recorded.

In the description herein, unless otherwise specified, "above" and "under" include this number.

Unless otherwise specified, terms used in this application have the known meaning as commonly understood by those skilled in the art. Unless otherwise specified, numerical values of parameters mentioned in this application can be measured with various measuring methods commonly used in the art (for example, they can be tested according to methods given in the embodiments of this application).

The term "about" is used to describe and explain minor changes. When used in combination with events or situations, the terms may refer to embodiments in which the events or situations occur precisely and embodiments in which the events or situations occur approximately. For example, when used in combination with numerical values, the terms may refer to a variation range less than or equal to $\pm 10\%$ of the numerical values, for example, less than or equal to $\pm 5\%$, less than or equal to $\pm 4\%$, less than or equal to $\pm 3\%$, less than or equal to $\pm 2\%$, less than or equal to $\pm 1\%$, less than or equal to $\pm 0.5\%$, less than or equal to $\pm 0.1\%$, or less than or equal to $\pm 0.05\%$. Besides, sometimes quantity, ratio, and other numerical values are represented in a format of range herein. It shall be understood that this kind of range format is for convenience and conciseness and it shall be flexibly understood that this kind of range format includes not only numerical values which are definitely appointed as range limitations, but also all individual numerical values or sub-ranges in the range, like each numerical value and sub-range definitely appointed.

A list of items connected by the term "one of" or other similar terms may refer to any combination in the listed items. For example, if the items A and B are listed, the phase "at least one of A, B, and C" means only A; only B; or A and B. In another embodiment, if the items A, B, and C are listed, the phrase "at least one of A, B, and C" means only A; or only B; only C; A and B (excluding C); A and C (excluding B); B and C (excluding A); or all of A, B, and C. The item A may include a single component or a plurality of components. The item B may include a single component or a plurality of components. The item C may include a single component or a plurality of components.

Unless otherwise specified, all implementations and optional embodiments in this application can be combined with one another to form novel technical solutions, and such technical solutions shall be regarded within the disclosed content of this application.

Unless otherwise specified, all technical features and optional technical features in this application can be combined with one another to form novel technical solutions, and such technical solutions shall be regarded within the disclosed content of this application.

With the application and popularization of lithium ion batteries, they are increasingly concerned in terms of energy density, safety performance, and cycle performance. The performance of the negative electrode active material, to a certain extent, depends on the energy density, cycle performance, storage performance, and safety performance of the lithium ion batteries. Graphite, the most common negative electrode active material at present features less polarization, stable charge and discharge platform, and the like. However, the performance of commercial graphite is nearly developed to its limit currently, the room for improvement of the reversible specific capacity and the energy density thereof is quite limited.

In view of this, it is indeed necessary to provide a negative electrode active material capable of replacing graphite.

**Negative electrode active material**

A first aspect of an embodiment of this application provides a negative electrode active material, having a core-shell structure, where the negative electrode active material includes a first shell and at least two core material materials located in the first shell; the core material includes hard carbon; and the first shell includes a first shell material with a volumetric specific capacity of 800 mAh/cm$^3$ or more.

Hard carbon, one of the potential negative electrode active materials capable of replacing graphite, has the advantages of a high mass specific capacity, so that it can improve the mass energy density of the lithium ion batteries well. At present, researches on hard carbon are mainly confined to research of materials themselves, and there are seldom research at the level of electrode assemblies.

It is found by the applicant of this application in the process of studying the production process of the electrode assembly, hard carbon has the following defects in the production and processing process. (1) The corner edge of hard carbon particles is relatively sharp, and particles are unlikely to slide, which results in a strip breakage phenomenon in a negative electrode plate production and processing process (for example, cold pressing, slicing, and the like); (2) as the corner edge of hard carbon particles is relatively sharp, the current collector (for example, the copper foil, and the like) is also easily damaged in the production and processing process such as cold pressing of the negative electrode plate, and the separator is also easily damaged after the electrode assembly is prepared. Therefore, the risk of a micro short-circuit in the battery is relatively high, leading to a relatively high self-discharge (K value) of the lithium ion battery, which is harmful to fully exerting the electrochemical performance. Besides, hard carbon also has the defects of relatively low compaction density and first coulombic efficiency, so that the volume energy density of the lithium ion battery will also be affected.

It is found by research of the applicant that a shell is arranged on the surface of the hard carbon particles to prevent the sharp corner angle of the hard carbon particles from damaging the current collector and the separator. However, a conventional shell is arranged on the surface of the hard carbon particles, for example, an amorphous carbon layer, the volume energy density of the negative electrode active material obtained is still relatively low, so that the volume energy density of the lithium ion battery cannot be effectively improved.

By using other negative electrode active materials with high volumetric specific capacity can effectively improve the volume energy density of the lithium ion battery, however, the negative electrode active materials still have a huge volume effect. Such negative electrode active material after cyclic charge and discharge many times is easily pulverized and even falls from the current collector, so that the negative electrode active material particles and the negative electrode active material and the current collector lose electrical contact, finally resulting in rapid attenuation of the capacity of the lithium ion battery and difficulty to have good cycle performance. Moreover, the volume effect of the negative electrode active material also induces the continuous formation of a novel solid electrolyte interface (SEI) film on the surface of the negative electrode active material, finally resulting in reduction of coulombic efficiency and an increase of internal resistance of the lithium ion battery.

The negative electrode active material provided by this application has a multi-core core-shell structure, where there are at least two core materials, and the first shell includes a first shell material with the volumetric specific capacity of 800 mAh/cm$^3$ or more. It is proved by the applicant through a great number of studies and practices that the negative electrode active material provided by this application can have relatively high compaction density and first coulombic efficiency. The negative electrode plate and the electrochemical apparatus using the negative electrode active material can have good production and processing performance, and the electrochemical apparatus using the negative electrode active material can have low self-discharge, high volume energy density, and good cycle performance and storage performance.

Not restrained by any theory, the applicant of this application speculates possible reasons, including the following:

First, as the core material is coated in the first shell, direct contact between the core material and the current collector and the separator is avoided. Therefore, the negative electrode plate and the electrochemical apparatus using the negative electrode active material provided by this application may have good production and processing performance, and the electrochemical apparatus further has relatively low self-discharge and better capacity exertion.

Second, as the core material is coated in the first shell, the defect that the core material is poor in slip effect may be overcome, and moreover, the first shell may effectively affect slip of the core material particles, which further improves the production and processing performance of the negative electrode plate.

Third, compared with hard carbon, the density of the first shell material used in this application is relatively high. Therefore, the negative electrode active material provided by this application as a whole has a higher compaction density, so that the electrochemical apparatus using the same may have a relatively high volume energy density.

Fourth, the volumetric specific capacity of the first shell material is relatively high (800 mAh/cm$^3$ or more), which may remedy the defect that the volumetric specific capacity of the core material is relatively low, so that the electrochemical apparatus using the same may have effectively improved volume energy density.

Fifth, different from a negative electrode active material of a conventional single-core core-shell structure, the negative electrode active material provided by this application has the multi-core core-shell structure, and there are at least two core material particles inside the first shell. The core material changes a little in terms of volume in the charge and discharge processes. Therefore, during charging, the first shell may expand towards both a gap between the at least two core material particles and external space, so as to further buffer stress generated in the volume change process. Therefore, the probability that the negative electrode active material provided by this application is pulverized and falls from the current collector is relatively low, so that the electrochemical apparatus using the same may have effectively improved cycle performance and storage performance.

In some embodiments, the first shell includes a first element capable of forming an alloy with Li. The first element can form the alloy with Li, so that the volume of the negative electrode active material and the volume energy density of the electrochemical apparatus can be improved. To better improve the capacity of the negative electrode active material and the volume energy density of the electrochemical apparatus, optionally, the first element includes at least one of Sn, Si, Sb, and Ge. Specifically, the first shell material may include at least one of a simple substance or a compound comprising the first element. The compound including the first element may include, but is not limited to, an oxide, an alloy, and the like.

As an embodiment, the first shell material may include, but is not limited to, at least one of a single substance

stannum, $SnO_x$, a stannum alloy, a single substance silicon, $SiO_y$, a silicon alloy, a single substance antimony, and a single substance germanium, wherein $0<x\leq2$ and $0<y\leq1.5$. Optionally, the first shell material includes at least one of $SnO_x$, a stannum alloy, $SiO_y$, and a silicon alloy. Further, the first shell material includes $SnO_x$. Compared with the single substance stannum (or silicon), a material in the form of oxides and alloys may have a less volume expansion coefficient, so that the cycle performance and the storage performance of the electrochemical apparatus can further be improved.

In some embodiments, based on the total mass of the negative electrode active material, the mass percentage of the first element may be 2-20%. For example, the mass percentage of the first element may be about 2%, about 3%, about 4%, about 5%, about 6%, about 7%, about 8%, about 9%, about 10%, about 12%, about 14%, about 16%, about 18%, and about 20% or a range formed by any numerical values above. Optionally, the mass percentage of the first element is 2-18%, 2-16%, 2-14%, 2-12%, 2-10%, 2-8%, 2-6%, or 2-4%.

In a case that the content of the first element is within an appropriate range, the negative electrode active material can have a relatively less volume effect while having a relatively high capacity, so that the electrochemical apparatus using the negative electrode active material can have low self-discharge, high volume energy density, and good cycle performance and storage performance. In a case that the content of the first element is in an appropriate range, the following conditions may also be avoided: (1) the content of the first element is relatively low, the effect to improve the capacity of the negative electrode active material and the volume energy density of the electrochemical apparatus may not be obvious; (2) the content of the first element is relatively high, the volume expansion of the negative electrode active material as a whole is improved, the probability that the negative electrode active material is pulverized and falls from the current collector may be increased, and moreover, the volume energy density of the electrochemical apparatus may also be decreased.

In some embodiments, the volumetric particle size Dv50 of the first shell material may be 60-500 nm. For example, the volume particle size Dv50 of the first shell material is about 60 nm, about 70 nm, about 80 nm, about 90 nm, about 100 nm, about 125 nm, about 150 nm, about 175 nm, about 200 nm, about 225 nm, about 250 nm, about 275 nm, about 300 nm, about 325 nm, about 350 nm, about 375 nm, about 400 nm, about 425 nm, about 450 nm, about 475 nm, and about 500 nm or a range formed by any numerical values above. Optionally, the volume particle size Dv50 of the first shell material is 60-400 nm, 60-300 nm, 60-250 nm, 60-200 nm, 60-150 nm, 60-125 nm, 60-100 nm, 80-400 nm, 80-300 nm, 80-250 nm, 80-200 nm, 80-150 nm, 80-125 nm, or 80-100 nm.

In a case that the volumetric particle size Dv50 of the first shell material is within an appropriate range, the negative electrode active material can have a relatively less volume effect while having a relatively high capacity, so that the electrochemical apparatus using the negative electrode active material can have low self-discharge, high volume energy density, and good cycle performance and storage performance. In a case that the volume particle size Dv50 of the first shell material is in the appropriate range, following conditions may also be avoided: (1) the volume particle size Dv50 of the first shell material is relatively small, slurry is easily agglomerated, so that the dispersion uniformity of the slurry may become poor, and the cost of the negative electrode active material may be relatively high; and (2) the volume particle size Dv50 of the first shell material is relatively large, the volume expansion coefficient thereof is usually high, and the coating effect to the core material may also become poor.

In some embodiments, the first shell further includes a first conductive carbon material. This application has no particular limitation to the existing position of the first conductive carbon material in the first shell. For example, the first conductive carbon material may be uniformly mixed with the first shell material in the first shell, or the first conductive carbon material may be located on the surface of the first shell material, or the first conductive carbon material may exist at two positions described above.

Optionally, the first conductive carbon material is located on the surface of the first shell material. For example, the first conductive carbon material is coated to the surface of the first shell material, or the first shell material is enwrapped in the first conductive carbon material. In this case, the first shell material will be restrained by the first conductive carbon material during volume expansion in a charging process, so that the first shell can have a less volume effect as a whole, and therefore, the probability that the negative electrode active material provided by this application is pulverized and falls from the current collector is less, and the cycle performance and the storage performance of the electrochemical apparatus can be further improved.

This application has no particular limitation to the type of the first conductive carbon material. In some embodiments, the first conductive carbon material includes at least one of amorphous carbon (for example, soft carbon, hard carbon, and the like), a carbon nanotube (for example, a single-wall carbon nanotube and a multi-wall carbon nanotube), graphene (for example, single-layer graphene and multi-layer graphene), and vapor deposited carbon. Optionally, the first conductive carbon material includes at least one of the carbon nanotube and the graphene. The carbon nanotube and graphene feature better flexibility. After they are disposed on the surface of the first shell material, the volume expansion of the first shell material may be better buffered, so that the probability that the negative electrode active material provided by this application is pulverized and falls from the current collector can further be reduced. Further, the first conductive carbon material includes the multi-layer graphene.

In some embodiments, the diameter of the carbon nanotube (including the single-wall carbon nanotube and the multi-wall carbon nanotube) may be 10-100 nm. In some embodiments, the thickness of the multi-layer graphene may be 5-100 nm.

In some embodiments, the first conductive carbon material is located on the surface of the first shell material, and the first conductive carbon material includes at least one of the carbon nanotube and the graphene. Particularly, the first conductive carbon material includes multi-layer graphene.

The content of the first conductive carbon material should not be too high. When the content of the first conductive carbon material is relatively high, the content of the first shell material is relatively lowered, which is harmful to exerting the advantage of a high volume of the first shell material. In some embodiments, based on the total mass of the negative electrode active material, the mass percentage of the first conductive carbon material may be less than or equal to 20%. For example, the mass percentage may be less than or equal to 18%, less than or equal to 16%, less than or equal to 14%, less than or equal to 12%, less than or equal to 10%, less than or equal to 8%, less than or equal to 6%, or less than or equal to 4%. Optionally, the mass percentage of the first conductive carbon material is 0.5-20%, 0.5-18%, 0.5-16%, 0.5-14%, 0.5-12%, 0.5-10%, 0.5-8%, 0.5-6%, 0.5-4%, 1-20%, 1-18%, 1-16%, 1-14%, 1-12%, 1-10%, 1-8%, 1-6%, or 1-4%.

In some embodiments, the negative electrode active material further includes a second shell located on the surface of the first shell, the second shell including a second conductive carbon material. In a case that the negative electrode active material further includes the second shell, the first shell material can be prevented from being exposed, and the volume expansion of the first shell material is further reduced. Therefore, the probability that the negative electrode active material provided by this application is pulverized and falls from the current collector is less.

This application has no particular limitation to the type of the second conductive carbon material. In some embodiments, the second conductive carbon material includes at least one of amorphous carbon (for example, soft carbon, hard carbon, and the like), a carbon nanotube (for example, a single-wall carbon nanotube and a multi-wall carbon nanotube), graphene (for example, single-layer graphene and multi-layer graphene), and vapor deposited carbon. Optionally, the second conductive carbon material includes at least one of the carbon nanotube and the graphene. The carbon nanotube and graphene feature better flexibility to better buffer the volume expansion of the first shell material, so that the probability that the negative electrode active material provided by this application is pulverized and falls from the current collector can further be reduced. Further, the second conductive carbon material includes the multi-layer graphene.

In some embodiments, the diameter of the carbon nanotube (including the single-wall carbon nanotube and the multi-wall carbon nanotube) may be 10-100 nm. In some embodiments, the thickness of the multi-layer graphene may be 5-100 nm.

The content of the second conductive carbon material should not be too high. When the content of the second conductive carbon material is relatively high, the volume exertion of the negative electrode active material as a whole may be affected, which is harmful to exerting the advantage of the high volume of the first shell material. In some embodiments, based on the total mass of the negative electrode active material, the mass percentage of the second conductive carbon material is less than or equal to 30%. For example, the mass percentage may be less than or equal to 28%, less than or equal to 26%, less than or equal to 24%, less than or equal to 22%, less than or equal to 20%, less than or equal to 18%, less than or equal to 16%, less than or equal to 14%, less than or equal to 12%, less than or equal to 10%, less than or equal to 8%, less than or equal to 6%, or less than or equal to 4%. Optionally, the mass percentage of the second conductive carbon material is 0.5-30%, 0.5-24%, 0.5-20%, 0.5-18%, 0.5-16%, 0.5-14%, 0.5-12%, 0.5-10%, 0.5-8%, 0.5-6%, 0.5-4%, 1-30%, 1-24%, 1-20%, 1-18%, 1-16%, 1-14%, 1-12%, 1-10%, 1-8%, 1-6%, or 1-4%.

In some implementations, the thickness of the second shell may be 1-10 nm. In a case that the thickness of the second shell is within an appropriate range, the negative electrode active material can have a relatively less volume effect while having a relatively high capacity, so that the electrochemical apparatus using the negative electrode active material can have low self-discharge, high volume energy density, and good cycle performance and storage performance.

In some embodiments, based on the total mass of the negative electrode active material, the mass percentage of the carbon element may be 30-98%. The carbon element may be derived from at least one of the core material, the first conductive carbon material, and the second conductive carbon material. Optionally, the mass percentage of the carbon element is 35-98%, 40-98%, 45-98%, 50-98%, 55-98%, 60-98%, 65-98%, 70-98%, 75-98%, 80-98%, 85-98%, or 90-98%.

In some embodiments, the negative electrode active material may further include the first element and elements except for the carbon element, for example, oxygen element, other metal elements (for example, lithium), and the like different from the first element.

The negative electrode active material provided by this application includes at least two core material particles located in the first shell. In some embodiments, a quantity of the core material may be greater than or equal to 3. In a case that the quantity of the core material is within an appropriate range, an appropriate void structure can be formed, which is beneficial to buffering stress generated in a volume change process of the first shell. Moreover, a large quantity of core material is inappropriate. In a case that the quantity of the core material is large, the overall particle size of the negative electrode active material is large, and in this case, the transmission distance of lithium ions is long, so that the electrochemical performance of the electrochemical apparatus may be reduced; besides, in a case that the quantity of the core material is large, gaps between the core materials are increased, and in this case, it may be harmful to transmission of lithium ions and the compaction density of the negative electrode active material may be reduced. Specifically, the quantity of the core material may be 3, 4, 5, 6, 7, 8, 9, 10 or a range formed by any numerical values above. Optionally, the quantity of the core material is 2-10, 2-9, 2-8, 2-7, 2-6, 2-5, 2-4, 2-3, 3-10, 3-9, 3-8, 3-7, 3-6, 3-5, or 3-4.

In some embodiments, the pellet density of the core material under a pressure of 5 tons is 0.9-1.2 $g/cm^3$.

In some embodiments, Moh's hardness of the core material is greater than 2.

In some embodiments, the core material usually has a sharp edge angle. For example, the morphology of the core material may include regular shapes such as a triangle, a rectangle and a square, and other irregular shapes.

The core material provided by this application may be either purchased from the market or obtained by synthesis. An exemplary synthetic method includes the following steps: a carbon source (for example, a biomass material, resin, asphalt, and the like) is subjected to steps such as low-temperature sintering treatment, high-temperature carbonization treatment, and crushing classification to obtain the core material.

In some embodiments, the negative electrode active material has a core-shell material and includes a first shell and at least two core material particles located in the first shell, where the first shell includes a first shell material and a first conductive carbon material located on a surface of the first shell material; the first shell material includes at least one of a single or a compound containing a first element, the first element including at least one of Sn, Si, Sb, and Ge; the first conductive carbon material includes at least one of a carbon nanotube and graphene; and based on a total mass of the negative electrode active material, the mass percentage of the first element is 2-20%, optionally 2-10%.

In some embodiments, the negative electrode active material has a core-shell material and includes a first shell, at least two core material particles located in the first shell, and a second shell located on a surface of the first shell, where the first shell includes a first shell material and a first conductive carbon material located on a surface of the first shell material; the second shell includes a second conductive carbon material; the first shell material includes at least one of a single or a compound containing a first element, the first element including at least one of Sn, Si, Sb, and Ge; the first conductive carbon material includes at least one of a carbon nanotube and graphene; the second conductive carbon material includes at least one of amorphous carbon, a carbon nanotube, graphene, and vapor deposited carbon; based on a total mass of the negative electrode active material, the mass percentage of the first element is 2-20%, optionally 2-10%.

FIG. 1 is a structural schematic diagram of a negative electrode active material provided by this application, where 1 represents the core material, 2 represents the first shell, and 3 represents the second shell. The first shell 2 includes both the first shell material 21 and the first conductive carbon material 22, and the first shell material 21 is enwrapped in the first conductive carbon material 22.

In some embodiments, the volumetric particle size Dv50 of the negative electrode active material is 2-15 μm. Optionally, the volumetric particle size Dv50 of the negative electrode active material is 2-14 μm, 2-12 μm, 2-10 μm, 2-9 μm, 2-8 μm, 3-14 μm, 3-12 μm, 3-10 μm, 3-8 μm, 4-14 μm, 4-12 μm, 4-10 μm, 4-8 μm, 5-14 μm, 5-12 μm, 5-10 μm, or 5-8 μm.

In some embodiments, the volumetric particle size Dv99 of the negative electrode active material is 10-45 μm. Optionally, the volumetric particle size Dv99 of the negative electrode active material is 10-40 μm, 10-36 μm, 10-32 μm, 10-28 μm, 10-24 μm, 10-20 μm, 12-40 μm, 12-36 μm, 12-32 μm, 12-28 μm, 12-24 μm, 12-20 μm, 15-40 μm, 15-36 μm, 15-32 μm, 15-28 μm, 15-24 μm, or 15-20 μm.

The morphology of the negative electrode active material particles is usually spherical or spheroidal. The term "spheroidal" in this application means that the shape of the particles is basically spherical, or the length-diameter ratio of the particles approaches to 1. For example, the shape is a sphere not greater than 1.3, and optionally, not greater than 1.2.

The negative electrode active material provided by this application may have a relatively high first reversible specific capacity. In some embodiments, the first reversible specific capacity of the negative electrode active material at 0-2.0 V is 300-1200 mAh/g.

The first reversible specific capacity of the negative electrode active material at 0-2.0 V may be obtained by the following test method: a single side-coated negative electrode plate is cut into a certain area as a working electrode; then by taking a lithium sheet as a counter electrode and a porous polyethylene film as a separator, an electrolyte is injected to assembly a button battery; and the button battery is discharged to 0V first with small currents in three phases: 0.05C/50μA/20μA, and is subjected to 0.1C constant current charge to 2.0V, and the first charge capacity of the button battery is recorded. The first reversible specific capacity of the negative electrode active material at 0-2.0 V is equal to the first charge capacity of the button battery/mass of the negative electrode active material. The specific composition of the electrolyte is not specifically limited. For example, the electrolyte may be a $LiPF_6$ solution with a concentration of 1 mol/L, and a solvent may be obtained by mixing ethylene carbonate (EC) with diethyl carbonate (DEC) at a mass ratio of 1: 1.

In this application, the contents of the first element and the carbon element in the negative electrode active material may be measured by known instruments and methods in the art. For example, the contents are measured through an X ray photoelectron spectroscopy (XPS) analysis technique, an X-ray fluorescence (XRF) analysis technique, an inductively coupled plasma-atomic emission spectrometry (ICP-AES) analysis technique, an inductively coupled plasma mass spectrometry (ICP-MS) analysis technique, an atomic emission spectrometry (AES) analysis technique, an atomic absorption spectrum (AAS) analysis technique, and the like.

In this application, the particle sizes Dv50 and Dv99 of the material both are known meaning in the art, respectively representing corresponding particle sizes in a case that accumulative volume distribution percentages of the material reach 50% and 99%, which may be measured by known instruments and methods in the art, for example, a particle size distribution laser diffraction technique with reference to GB/T 19077-2016. An exemplary test method includes the following steps: 1 g of a sample and 20 mL of deionized water are weighed and are uniformly mixed with a micro dispersant to obtain a mixture; the mixture is placed in an ultrasonic device for ultrasonic treatment for 5 min; and the solution is poured into a sample injection system Hydro 2000SM for test, and for example, the test device is Mastersizer 3000 produced by Malvern Instruments Ltd. In the test process, in a case that a laser beam passes through the dispersive particle sample, the particle size is measured by measuring the intensity of scattered light, and then particle size distribution forming the scattering spectrogram is calculated.

[Preparation method]

A first aspect of an implementation of this application further provides a method for preparing a negative electrode active material, where the negative electrode active material according to any embodiment in the first aspect of the implementation of this application may be prepared.

In some embodiments, the method for preparing a negative electrode active material may include the following steps: S 10, hard carbon and a first shell material with a volumetric specific capacity of 800 mAh/cm$^3$ or more are provided; and S20, the hard carbon, the first shell material, and an adhesive are uniformly mixed for extruding granulation and spheroidizing treatment to obtain the negative electrode active material. This application has no particular limitation to the type of the adhesive as long as it may play an adhesion role. For example, the adhesive may include, but is not limited to, at least one of polyvinylidene fluoride (PVDF), polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, polyvinyl alcohol, styrene butadiene rubber (SBR), carboxymethylcellulose, hydroxy propyl cellulose, polyvinyl alcohol, polyvinylpyrrolidone, polyurethane, and epoxy resin.

In some embodiments, the first conductive carbon material may further be added in S20. For example, the hard carbon, the first shell material, the first conductive carbon material, and the adhesive are uniformly mixed for extruding granulation and spheroidizing treatment to obtain the negative electrode active material. In the obtained negative electrode active material, the first shell includes both the first shell material and the first conductive carbon material.

In some embodiments, before S20, the method for preparing a negative electrode active material further includes the following pre-treatment step: S11, the first conductive carbon material is coated to the surface of the first shell material. There are no particular limitations to the coating method, for example, a hydrothermal reaction method, a sol-gel method, a chemical vapor deposition method (CVD), and the like. For example, the first shell material, the first conductive carbon material or a precursor thereof are mixed in a solution and are subjected to a hydrothermal reaction or a sol-gel reaction to coat the first shell material with the first conductive carbon material. The first conductive carbon material may further be coated to the surface of the first shell material directly through the chemical vapor deposition method.

In some embodiments, the method for preparing a negative electrode active material further includes: S30, the second conductive carbon material is coated to the surface of a product obtained in S20. There are no particular limitations to the coating method, for example, a hydrothermal reaction method, a sol-gel method, a chemical vapor deposition method (CVD), and the like. For example, the product obtained in S20, the second conductive carbon material or a precursor thereof are mixed in a solution and subjected to a hydrothermal reaction or a sol-gel reaction to coat the surface of the product obtained in S20 with the second conductive carbon material. The second conductive carbon material may further be coated to the surface of the product obtained in S20 directly through the chemical vapor deposition method.

In some embodiments, the method for preparing a negative electrode active material may include the following steps: the first shell material and the first conductive carbon material are mixed to coat the surface of the first shell material with the first conductive carbon material; and the first shell material with the surface coated with the first conductive carbon material, the hard carbon, and the adhesive are uniformly mixed for extruding granulation, spheroidizing treatment, and secondary coating of the second conductive carbon material in sequence to obtain the negative electrode active material.

In some embodiments, the method for preparing a negative electrode active material may include the following steps: the hard carbon, the first shell material, the hard carbon, and the adhesive are uniformly mixed for extruding granulation, spheroidizing treatment, and secondary coating of the second conductive carbon material in sequence to obtain the negative electrode active material.

Of course, in a case that the negative electrode active material provided by this application is prepared, it is not limited to the methods described above, and other methods known in the art may also be used.

## Negative electrode plate

A second aspect of this application provides a negative electrode plate, including a negative electrode current collector and a negative electrode film, where the negative electrode film includes the negative electrode active material in the first aspect of the implementation of this application. The negative electrode film may be disposed on one or two surfaces of the negative electrode current collector.

The negative electrode plate provided by this application may have relatively high compaction density and good production and processing performance, so that an electrochemical apparatus using the same may have low self-discharge, high volume energy density, and good cycle performance and storage performance.

The negative electrode film provided by this application does not exclude other negative electrode active materials except for the negative electrode active material in the first aspect of the implementation of this application. The specific type of other negative electrode active materials is not specifically limited, and may be selected according to requirements. As an embodiment, the other negative electrode active materials may include, but is not limited to, at least one of graphite, mesocarbon microbeads (MCMB), soft carbon, and $Li_4Ti_5O_{12}$.

The negative electrode film further optionally includes a conductive agent. The specific type of the conductive agent is not specifically limited, and may be selected according to requirements. As an embodiment, the conductive agent includes, but is not limited to, at least one of conductive graphite, carbon black, acetylene black, Ketjen Black, a carbon nanotube, graphene, and carbon nanofiber.

The negative electrode film further optionally includes an adhesive. The specific type of the adhesive is not specifically limited, and may be selected according to requirements. As an embodiment, the adhesive includes, but is not limited to, at least one of styrene butadiene rubber (SBR), carboxymethylcellulose, hydroxy propyl cellulose, polyvinyl alcohol, polyvinylpyrrolidone, polyurethane, and epoxy resin.

The negative electrode film further optionally includes a thickener. The specific type of the thickener is not specifically limited, and may be selected according to requirements. As an embodiment, the thickener includes, but is not limited to, sodium carboxymethylcellulose (CMC).

The negative electrode current collector may use a metal foil or a porous metal plate, for example, a foil or a porous plate of metals such as copper, nickel, titanium, and ferric or a combination thereof. As an embodiment, the negative electrode current collector may be a copper foil.

In some embodiments, an adhesive force between the negative electrode film and the negative electrode current collector is 9-30 N/m, and a cohesive force of the negative electrode film is 40-100 N/m.

The adhesive force between the negative electrode film and the negative electrode current collector and the cohesive force of the negative electrode film may be obtained by using the following test method: the negative electrode plate is cut into a sample with a certain area (for example, the width is 30 mm and the length is 100-160 mm); the sample is adhered to a steel plate with a double-sided tape (for example, the model is 3M9448A, the width is 20 mm, and the length is 90-150 mm), and the negative electrode film and the double-sided tape are fully adhered by being rolled by a 2 Kg compression roller; and a limiting block of a tensile machine is adjusted to an appropriate position for a 180°bending peel test to obtain the adhesive force between the negative electrode film and the negative electrode current collector and the cohesive force of the negative electrode film. A peeling distance during the test may be 40 mm, and a peeling rate may be 50 mm/min. A test instrument may be an Instron 33652 tester.

The negative electrode plate provided by this application may be prepared by a conventional method in the art. Usually, the negative electrode active material, the optional conductive agent and adhesive, the thickener, and the like are dispersed in the solvent to form uniform negative electrode slurry, then the negative electrode slurry is coated to the negative electrode current collector, and the negative electrode current collector is subjected to steps such as drying and hot-pressing to obtain the negative electrode plate. The solvent may be N-methylpyrrolidone (NMP) or deionized water.

## Electrochemical apparatus

A third aspect of an implementation of this application provides an electrochemical apparatus, including any apparatus in which an electrochemical reaction occurs to convert chemical energy and electric energy mutually. Specific embodiments of the apparatus include all types of lithium secondary batteries. Particularly, the lithium secondary battery includes a lithium metal secondary battery, a lithium ion secondary battery, a lithium polymer secondary battery or a lithium ion polymer secondary battery.

The negative electrode plate used by the electrochemical apparatus provided by this application is the negative electrode plate in the second aspect of the implementation of this application. Therefore, the electrochemical apparatus has low self-discharge, a high volume energy density, good cycle performance, and storage performance.

In some embodiments, a K value of the electrochemical apparatus is 0.01-2 mV/h. Optionally, the K value of the electrochemical apparatus is 0.01-1.4 mV/h. The K value may be obtained by using the following test method: the electrochemical apparatus is charged to 50% SOC, and a potential at the time is tested and marked as OCV1 (mV); and after the electrochemical apparatus is left still for 48 h, the potential is tested again and marked as OCV2 (mV), where K value=(OCV1-OCV2)/48.

In some embodiments, the electrochemical apparatus provided by this application further includes a positive electrode plate, a separator, and an electrolyte.

In some embodiments, the positive electrode plate, the separator, and the electrolyte may be prepared into an electrode assembly through a winding process or a stacking process.

The electrochemical apparatus provided by this application further includes an outer package for packaging the electrode assembly and the electrolyte. In some embodiments, the outer package may be a hard shell, for example, a hard plastic shell, an aluminum shell, a steel shell, and the like. The outer package may also be a soft package, for example, a bag type soft package. A material of the soft package may be a plastic, for example, at least one of an aluminum plastic film, polypropylene, polybutylene terephthalate, and poly(butylene succinate).

[Positive electrode plate]

The material, composition, and manufacturing method of the positive electrode plate used in the electrochemical apparatus provided by this application may include any known techniques in the prior art.

In some embodiments, the positive electrode plate includes a positive electrode current collector and a positive electrode film located on at least one surface of the positive electrode current collector. The positive electrode film usually includes a positive electrode active material and optional conductive agent and adhesive.

The positive electrode current collector may use a metal foil or a porous metal plate, for example, a foil or a porous plate of metals such as aluminum, copper, nickel, titanium, and silver or a combination thereof. As an embodiment, the positive electrode current collector may be an aluminum foil.

The positive electrode active material includes a material capable of absorbing and releasing lithium, and the specific type of the positive electrode active material is not specifically limited, and may be selected according to requirements. As an embodiment, the positive electrode active material includes, but is not limited to, at least one of lithium cobalt oxide, a lithium nickel cobalt manganese ternary material, a lithium nickel cobalt aluminum ternary material, lithium iron phosphate, a lithium-rich manganese-based material, and respective modified compounds. The modified compounds of the positive electrode active materials may be obtained by doping modification, surface coating modification or doping and coating modification on the positive electrode active materials.

The specific type of the conductive agent is not specifically limited, and may be selected according to requirements. As an embodiment, the conductive agent includes, but is not limited to, at least one of conductive graphite, carbon black, acetylene black, Ketjen Black, a carbon nanotube, graphene, and carbon nanofiber.

The specific type of the adhesive is not specifically limited, and may be selected according to requirements. As an embodiment, the adhesive includes, but is not limited to, at least one of polyvinylidene fluoride (PVDF), polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, a tetrafluoroethylene-hexafluoropropylene copolymer, and polyvinyl alcohol.

The positive electrode plate provided by this application may be prepared by a conventional method in the art. Usually, the positive electrode active material, the optional conductive agent and adhesive, and the like are dispersed in the solvent to form uniform positive electrode slurry, then the negative electrode slurry is coated to the positive electrode current collector, and the positive electrode current collector is subjected to steps such as drying and hot-pressing to obtain the positive electrode plate. The solvent may be N-methylpyrrolidone, but this application is not limited thereto.

[Electrolyte]

The electrolyte plays a role of conducting active ions between the positive electrode plate and the negative electrode plate. The electrolyte capable of being used in the electrochemical apparatus provided by this application may be a known electrolyte in the prior art.

In some embodiments, the electrolyte includes an organic solvent, a lithium salt, and an optional additive, and types of the organic solvent, the lithium salt, and the additive are not specifically limited and may be selected according to requirements.

In some embodiments, as an embodiment, the lithium salt includes, but is not limited to, lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bis(trifluoromethanesulphonyl)imide (LiTFSI), lithium trifluoromethanesulfonate (LiTFS), lithium difluoro(oxalato)borate (LiDFOB), and lithium bis(oxalate)borate (LiBOB).

In some embodiments, as an embodiment, the organic solvent includes, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butyl carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma butyrolactone (GBL), sulfolane (SF), methyl sulfonyl methane (MSM), ethyl methyl sulfone (EMS), and ethyl sulfonyl ethane (ESE).

In some embodiments, the additive includes, but is not limited to, at least one of a negative electrode film forming additive and a positive electrode film forming additive. As an embodiment, the additive includes, but is not limited to, at least one of fluoroethylene carbonate (FEC), vinylene carbonate (VC), vinyl ethylene carbonate (VEC), ethylene sulfate (DTD), trimethylene sulfite, ethylene sulfite (ES), propane sultone (PS), prop-1-ene-1,3-sultone (PST), sulfonate cyclic quaternary ammonium salt, succinic anhydride, succinonitrile (SN), adiponitrile (AND), tris(trimethylsilyl)phosphate (TMSP), and tris(trimethylsilyl) borate (TMSB).

The electrolyte provided by this application may be prepared by a conventional and method in the art. For example, the organic solvent, the lithium salt, and the optional additive may be uniformly added to obtain the electrolyte. There is no particular limitation to the adding sequence of the materials. For example, the lithium salt and the optional additive may be added into the organic solvent to be uniformly mixed to obtain the electrolyte; or, the lithium salt is first added into the organic solvent, and then the optional additive is added into the organic solvent to be uniformly mixed to obtain the electrolyte.

[Separator]

The separator is disposed between the positive electrode plate and the negative electrode plate to mainly play a role of preventing the positive and positive electrodes from being shortcircuited and making active ions pass through. This application has no particular limitation to the type of the separator, and any known porous structure separator with good chemical stability and mechanical stability may be used. The separator may be either a single-layer film or a multi-layer composite film. In a case that the separator is the multi-layer composite film, the materials of the layers may be the same or different.

In some embodiments, the separator includes a polymer or an inorganic matter, and the like formed by a material stable to the electrolyte provided by this application.

For example, the separator may include a substrate layer and an optional surface treatment layer. The substrate layer is a non-woven fabric, a membrane or a composite membrane with the porous structure, and a material of the substrate layer includes at least one of polyethylene, polypropylene, polyethylene glycol terephthalate, and polyimide. As an embodiment, a polypropylene porous membrane, a polyethylene porous membrane, a polypropylene non-woven fabric, a polyethylene non-woven fabric or a polypropylene-polyethylene-polypropylene porous composite membrane may be used.

The surface treatment layer may be or may not be disposed on the surface of the substrate layer. In some embodiments, the surface treatment layer is disposed on at least one surface of the substrate layer, and the surface treatment layer may be a polymer layer or an inorganic matter layer, and may be a layer formed by mixing the polymer with the inorganic matter.

The inorganic matter layer includes inorganic particles and an adhesive. The inorganic particles include at least one of aluminum oxide, silicon oxide, magnesium oxide, titanium oxide, hafnium dioxide, stannic oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The adhesive includes at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinylether, polymethyl methacrylate, polytetrafluoroethylene, and polyhexafluoropropylene.

The polymer layer includes a polymer, and a material of the polymer includes at least one of polyamide, polyacrylonitrile, an acrylate polymer, polyacrylic acid, polyacrylate, polyvinylpyrrolidone, polyvinylether, polyvinylidene fluoride, and a vinylidene fluoride-hexafluoropropylene copolymer.

**Electronic device**

A fourth aspect of an implementation of this application provides an electronic apparatus, including the electrochemical apparatus in the third aspect of the implementation of this application.

There is no particular limitation to the electronic apparatus provided by this application, and the electronic apparatus may be any known electronic apparatus in the prior art. In some embodiments, the electronic apparatus may include, but is not limited to, a notebook computer, a pen input type computer, a mobile computer, an E-book player, a portable phone, a portable fax machine, a portable copying machine, a portable printer, a head-mounted stereo headphone, a video tape recorder, a liquid crystal television, a handheld cleaner, a portable CD machine, a mini disk, a transceiver, an electronic notebook, a calculator, a storage card, a portable sound recorder, a radio, a standby power supply, a motor, an automobile, a motorcycle, an assistant bicycle, a bicycle, a lighting apparatus, a toy, a game machine, a clock, an electric tool, a flash light, a camera, a household large storage battery, a lithium ion capacitor, and the like.

**Embodiments**

The embodiments below more specifically describe the content disclosed by this application. These embodiments are merely used for illustrative description because various modifications and variations made with the range of the content disclosed by this application are apparent to those skilled in the art. Unless otherwise specified, all parts, percentages, and ratios reported in the embodiments below are based on mass, and all reagents used in the embodiments may be commercially available or are synthesized according to conventional methods, and may be directly used without being further treated. Moreover, instruments used in the embodiments are commercially available.

**Test method**

(1) Compaction density test for negative electrode plate

Wafers with an area of S are cut out from the negative electrode plate and subjected to hot-pressing under a pressure of 5 tons, 10 wafers are measured to obtain an average weight m1 of the wafers and an average weight m2 of a copper foil, and then an average thickness H1 of the wafers and the average thickness H2 of the copper foil are measured with a tenthousandth micrometer.

$$\text{Compaction density of negative electrode plate (g/cm}^3\text{)}=(m1\text{-}m2)/[(H1\text{-}H2)\times S].$$

·

(2) First reversible specific capacity test for negative electrode active material

A single-side coated negative electrode plate is taken and cut into wafers with the diameter being 14 mm as working electrodes, and then by taking a lithium sheet with the diameter being 18 mm as a counter electrode and a porous polyethylene film with the diameter being 20 mm as a separator, an electrolyte is injected to assemble a button battery. The button battery is discharged to 0V first with small currents in three stages: $0.05C/50\mu A/20\mu A$ and then charged to 2.0V with a 0.1C constant current, and a first charge capacity of the button battery is recorded. The electrolyte is prepared by the following method: in a dried argon atmosphere glove box, ethylene carbonate (EC) and diethyl carbonate (DEC) are mixed at a mass ratio of 1: 1 to obtain an organic solvent; and $LiPF_6$ is added into the organic solvent to be uniformly mixed to obtain the electrolyte, and the concentration of $LiPF_6$ is 1 mol/L.

First reversible specific capacity (mAh/g) of negative electrode active material=first charge capacity of button battery/ mass of negative electrode active material.

(3) K value test for lithium ion secondary battery

The lithium ion secondary battery is charged to 50% SOC, and a potential at the time is tested and marked as OCV1 (mV); and after the lithium ion secondary battery is left still for 48 h, the potential is tested again and marked as OCV2 (mV). K value (mV/h) of lithium ion secondary battery=(OCV1-OCV2)/48.

(4) Cyclic capacity retention ratio test for lithium ion secondary battery

In a 25°C environment, the lithium ion secondary battery is charged to 4.53V with a 0.7C constant current and then discharged at a constant voltage till the current is less than 0.05C; after being left still for 5 min, the lithium ion secondary battery is discharged at a 1C constant current o 2.0V, which is a cyclic charge and discharge process, and the discharge capacity at the time is the discharge capacity of first cycle. The lithium ion secondary battery is subjected to 200-time charge and discharge cycles according to the above method, and the discharge capacity of the 200th cycle is recorded.

Capacity retention ratio of battery after 200th cycle=(discharge capacity of 200th cycle/discharge capacity of first cycle)×100%

(5) Cyclic volume expansion ratio test for lithium ion secondary battery

In a 25°C environment, the lithium ion secondary battery is charged to 4.53V with a 0.7C constant current and then discharged at a constant voltage till the current is less than 0.05C; after being left still for 5 min, the lithium ion secondary battery is discharged at a 1C constant current o 2.0V, which is a cyclic charge and discharge process, and the volume of the lithium ion secondary battery at the time is recorded as an initial volume. The lithium ion secondary battery is subjected to 50-time charge and discharge cycles according to the above method, and the volume of the lithium ion secondary battery after 50-time cycles is tested.

Volume expansion ratio of lithium ion secondary battery after 50-time cycles=[(volume after 50-time cycles-initial volume)/initial volume]×100%.

(6) Volume energy density test for lithium ion secondary battery

In a 25°C environment, the lithium ion secondary battery is charged to 4.53V with a 0.7C constant current and then discharged at a constant voltage till the current is less than 0.05C; after being left still for 5 min, the lithium ion secondary battery is discharged at a 1C constant current o 2.0V, which is a cyclic charge and discharge process. The lithium ion secondary battery is subjected to 50-time charge and discharge cycles according to the above method, and the discharge capacity of the 50th cycle and the volume after 50-time cycles are recorded.

Volume energy density (Wh/dm$^3$) of lithium ion secondary battery after 50-time cycles=(discharge capacity of 50th cycle×average output voltage)/volume after 50-time cycles.

During the above tests, 5 samples are tested in each embodiment and comparative embodiment, and the average value of the obtained test results is taken as a final test result.

**Embodiment 1**

Preparation of negative electrode active material

Single substance stannum particles (first shell material) with Dv50 being 60-100 nm, hard carbon (core material) with Dv50 being 2-9 $\mu$m, and an adhesive PVDF were uniformly mixed for extruding granulation and spheroidizing treatment to obtain the negative electrode active material.
Mass percentages of elements Sn and carbon in the negative electrode active material are analyzed by X-ray photoelectron spectroscopy (XPS), and results are shown in table 1.

Preparation of negative electrode plate

The negative electrode active material, the adhesive styrene butadiene rubber (SBR), and the thickener sodium carboxymethylcellulose (CMC) were fully stirred and mixed in an appropriate amount of solvent deionized water at a mass ratio of 97: 2: 1 to form negative slurry with a solid content being 40%; and the negative electrode slurry was coated to a copper foil of a negative electrode current collector, and the copper foil was dried at 85°C, was subjected to cold pressing, cutting, and slicing, and was dried at 120°C in vacuum for 12 h to obtain the negative electrode plate.

Preparation of positive electrode plate

The positive electrode active material $LiCoO_2$, the conductive agent carbon black (Super P), and the adhesive PVDF were fully stirred and mixed in an appropriate amount of solvent NMP at a mass ratio of 97: 1.4: 1.6 to form positive slurry with a solid content being 72%; and the positive electrode slurry was coated to an aluminum foil of a positive electrode current collector, and the aluminum foil was dried at 85°C, was subjected to cold pressing, cutting, and slicing, and was dried at 85°C in vacuum for 4 h to obtain the positive electrode plate.

Preparation of electrolyte

In a dried argon atmosphere glove box, ethylene carbonate (EC), ethyl methyl carbonate (EMC), and diethyl carbonate (DEC) were mixed at a mass ratio of 30: 50: 20 to obtain an organic solvent; and propane sultone, fluoroethylene carbonate, and $LiPF_6$ were added into the organic solvent to be uniformly mixed to obtain the electrolyte. The

concentration of LiPF$_6$ is 1mol/L, and based on the total mass of the electrolyte, the mass percentage of propane sultone is 1.5% and the mass percentage of fluoroethylene carbonate is 2%.

Preparation of separator

A porous polyethylene film with the thickness being 7 μm is used as a separator.

Preparation of lithium ion secondary battery

The positive electrode plate, the separator, and the negative electrode plate were sequentially stacked and wound to obtain an electrode assembly, the electrode assembly was put in an outer package aluminum plastic film, the electrolyte was injected, and steps such as vacuum packaging, standing, formation, shaping, capacity operation, and the like were carried out to obtain the lithium ion secondary battery.

**Embodiment 2**

A method for preparing the lithium ion secondary battery is similar to that in embodiment 1, and the difference lies in that the preparation parameters of the negative electrode active material are different, and the first shell material uses SnO$_2$.

**Embodiment 3**

A method for preparing the lithium ion secondary battery is similar to that in embodiment 1, and the difference lies in that the preparation parameters of the negative electrode active material are different, and the first shell material uses SnO.

**Embodiment 4**

A method for preparing the lithium ion secondary battery is similar to that in embodiment 1, and the difference lies in that the preparation parameters of the negative electrode active material are different.
Single substance stannum particles (first shell material) with Dv50 being 60-100 nm, hard carbon (core material) with Dv50 being 2-9 μm, multi-layer graphene (first conductive carbon material) with the thickness being 5-100 nm, and an adhesive PVDF were uniformly mixed for extruding granulation and spheroidizing treatment to obtain the negative electrode active material.

**Embodiment 5**

A method for preparing the lithium ion secondary battery is similar to that in embodiment 4, and the difference lies in that the preparation parameters of the negative electrode active material are different, and the first shell material uses SnO$_2$.

**Embodiment 6**

A method for preparing the lithium ion secondary battery is similar to that in embodiment 4, and the difference lies in that the preparation parameters of the negative electrode active material are different, and the first shell material uses SnO.

**Embodiment 7**

A method for preparing the lithium ion secondary battery is similar to that in embodiment 4, and the difference lies in that the preparation parameters of the negative electrode active material are different, and the first conductive carbon material uses the carbon nanotube with the diameter being 10-100 nm.

**Embodiment 8**

A method for preparing the lithium ion secondary battery is similar to that in embodiment 5, and the difference lies in that the preparation parameters of the negative electrode active material are different, and the first conductive carbon material uses the carbon nanotube with the diameter being 10-100 nm.

### Embodiment 9

A method for preparing the lithium ion secondary battery is similar to that in embodiment 6, and the difference lies in that the preparation parameters of the negative electrode active material are different, and the first conductive carbon material uses the carbon nanotube with the diameter being 10-100 nm.

### Embodiment 10

Glucose was dissolved in a solvent deionized water to obtain a uniform solution; and single substance stannum particles (first shell material) with Dv50 being 60-100 nm were added into the obtained uniform solution to be uniformly dispersed, the mixture was subjected to suction filtration and drying steps after hydrothermal treatment at 140-200°C for 8 h to obtain single substance stannum particles coated with an amorphous carbon precursor layer on the surface.

The single substance stannum particles coated with the amorphous carbon precursor layer, the hard carbon (core material) with Dv50 being 2-9 $\mu$m, and the adhesive PVDF were uniformly mixed for extruding granulation and spheroidizing treatment, and the mixture was sintered at 600-1200°C to obtain the negative electrode active material.

### Embodiment 11

A method for preparing the lithium ion secondary battery is similar to that in embodiment 10, and the difference lies in that the preparation parameters of the negative electrode active material are different, and the first shell material uses $SnO_2$.

### Embodiment 12

A method for preparing the lithium ion secondary battery is similar to that in embodiment 10, and the difference lies in that the preparation parameters of the negative electrode active material are different, and the first shell material uses SnO.

### Embodiment 13

A method for preparing the lithium ion secondary battery is similar to that in embodiment 4, and the difference lies in that the second shell is added to the surface of the negative electrode active material particles in embodiment 4. The second shell includes vapor deposited carbon formed by a chemical vapor deposition method.

Single substance stannum particles (first shell material) with Dv50 being 60-100 nm, hard carbon (core material) with Dv50 being 2-9 $\mu$m, multi-layer graphene (first conductive carbon material) with the thickness being 5-100 nm, and an adhesive PVDF were uniformly mixed for extruding granulation and spheroidizing treatment; the spheroidized powder was heated in an inert gas atmosphere to 500-1000°C and insulated for a period of time; replacing the inert gas by a gas containing an alkane gas source, and performing insulation continuously for a period of time; and after replacing the inert gas, performing cooling to obtain the negative electrode active material.

### Embodiment 14

A method for preparing the lithium ion secondary battery is similar to that in embodiment 13, and the difference lies in that the preparation parameters of the negative electrode active material are different, and the first shell material uses $SnO_2$.

### Embodiment 15

A method for preparing the lithium ion secondary battery is similar to that in embodiment 13, and the difference lies in that the preparation parameters of the negative electrode active material are different, and the first shell material uses SnO.

### Comparative embodiment 1

A method for preparing the lithium ion secondary battery is similar to that in embodiment 1, and the difference lies in that hard carbon is used as the negative electrode active material.

**Comparative embodiment 2**

A method for preparing the lithium ion secondary battery is similar to that in embodiment 1, and the difference lies in that single substance stannum coated with hard carbon is used as the negative electrode active material.

Table 1

| Sequence number | Sn content | Carbon content | K value of battery (mV/h) |
| --- | --- | --- | --- |
| Embodiment 1 | 5.06% | 94.94% | 1.38 |
| Embodiment 2 | 5.30% | 93.27% | 1.29 |
| Embodiment 3 | 5.10% | 94.21% | 1.32 |
| Embodiment 4 | 5.05% | 94.95% | 1.03 |
| Embodiment 5 | 5.20% | 93.40% | 0.98 |
| Embodiment 6 | 5.09% | 94.22% | 0.99 |
| Embodiment 7 | 5.12% | 94.88% | 0.90 |
| Embodiment 8 | 5.09% | 93.54% | 0.88 |
| Embodiment 9 | 5.10% | 94.21% | 0.82 |
| Embodiment 10 | 5.17% | 94.83% | 1.21 |
| Embodiment 11 | 5.00% | 93.65% | 1.12 |
| Embodiment 12 | 5.36% | 93.92% | 1.10 |
| Embodiment 13 | 5.21% | 94.79% | 0.86 |
| Embodiment 14 | 5.31% | 93.26% | 0.76 |
| Embodiment 15 | 5.11% | 94.20% | 0.78 |
| Comparative embodiment 1 | \ | \ | 1.44 |
| Comparative embodiment 2 | 5.12% | 94.15% | 2.10 |

Table 1 shows the self-discharge test results of embodiments 1-15 and comparative embodiments 1-2. It could be seen from the test results in embodiments 1-15 and comparative embodiment 1 that after compound granulation of the hard carbon particles and the stannum-based material (single substance stannum, $SnO_2$, and SnO), the self-discharge of the prepared lithium ion secondary battery is reduced obviously. A probable reason lies in that the negative electrode active material obtained by compound granulation is smoother in terms of particle morphology, so that the damage to the copper foil and separator is small. Furthermore, the risk of micro-circuit short in the battery is small, and the self-discharge rate of the battery is slowed down. Therefore, the K value of the lithium ion secondary battery is low. In embodiment 2, the single substance stannum coated with hard carbon is used as the negative electrode active material. Compared with embodiment 1, its self-discharge is more severe. A probable reason lies in that after coating the surface of the single substance stannum particles, the sharp corner angle of the hard carbon particles will damage the copper foil and the separator, and moreover, affected by the large volume effect of the stannum-based material, the damage to the copper foil and the separator by the hard carbon particles will be further aggravated.

It could be seen from the test results in embodiments 1-6 and embodiments 13-15 that after the surface of the stannum-based material is pre-coated with the conductive carbon material, the self-discharge of the lithium ion secondary battery is further reduced. Further, after the surface of the stannum-based material is pre-coated with the conductive carbon material, the self-discharge of the lithium ion secondary battery is further reduced.

It could be seen from the test results in embodiments 4-12 that compared with precoating the amorphous carbon to the surface of the stannum-based material, after the surface of the stannum-based material is pre-coated with the carbon nanotube and graphene, the self-discharge of the lithium ion secondary battery is further lower.

The applicant further studies the influence of the Sn content of the negative electrode active material provided by this application on performance of the lithium ion secondary battery. Results are shown in table 2 and table 3.

The methods for preparing the lithium ion secondary battery in embodiments 16-18 are similar to that in embodiment 13, and the difference lies in the mass fractions of the components, specifically shown in table 2.

Table 2

| Sequence number | Sn content | Carbon content | Compaction density (g/cm³) of negative electrode plate | First reversible specific capacity (mAh/g) for negative electrode active material | Volume expansion ratio of battery after 50-time cycles |
|---|---|---|---|---|---|
| Embodiment 1 | 5.06% | 94.94% | 1.03 | 515.0 | 6.0% |
| Embodiment 4 | 5.05% | 94.95% | 1.03 | 516.2 | 5.8% |
| Embodiment 13 | 5.21% | 94.79% | 1.03 | 517.9 | 5.4% |
| Embodiment 16 | 10.05% | 89.95% | 1.09 | 528.1 | 15.1% |
| Embodiment 17 | 15.21% | 84.79% | 1.13 | 538.2 | 24.4% |
| Embodiment 18 | 20.10% | 79.90% | 1.18 | 548.8 | 33.2% |
| Comparative embodiment 1 | \ | \ | 1.00 | 510.0 | 1.0% |
| Comparative embodiment 2 | 5.12% | 94.15% | 1.05 | 531.0 | 18.3% |

It could be seen from the test results in table 2 that with the increase of the mass percentage of the element Sn, the compaction density of the negative electrode plate and the first reversible specific capacity of the negative electrode active material both increase. However, as the volume effect of the single substance stannum particles itself is large, when the content is high, the volume expansion of the lithium ion secondary battery is more obvious. Therefore, optionally, the mass percentage of the element Sn in the negative electrode active material provided by this application should not exceed 20%, and further, the mass percentage of the element Sn is 2-20%. Further, the mass percentage of the element Sn is 2-10%.

It could further be seen from the test results in embodiments 1, 4, and 13 and comparative embodiment 2 that in a case that the mass percentage of the element Sn is nearly the same, by comparing coating the single substance stannum particles to the surface of the hard carbon particles with coating the hard carbon particles to the surface of the single substance stannum particles, the volume expansion ratio of the lithium ion secondary battery prepared in the former is obviously lower. A probable reason lies in that the negative electrode active material provided by this application has the core-shell structure, and there are at least two hard carbon particles. Therefore, the single substance stannum particles may expand toward both the gap between the at least two core material particles and external space to buffer the stress generated in the volume change process, so that the volume expansion ratio of the lithium ion secondary battery can be further obviously reduced. The volume and expansion of the single substance stannum in the negative electrode active material particles prepared in the comparative document 2 may be limited only by being restrained by the hard carbon, which results in a limited effect of improvement of the volume expansion ratio of the lithium ion secondary battery.

The methods for preparing the lithium ion secondary battery in embodiments 19-22 are similar to that in embodiment 14, and the difference lies in the mass fractions of the components, specifically shown in table 3. A method for preparing the lithium ion secondary battery in comparative embodiment 3 is similar to that in embodiment 1, and the difference lies in that $SnO_2$ coated with hard carbon is used as the negative electrode active material. In table 3, the change rate of the volume energy density of the batteries in embodiments and comparative embodiments refers to a change rate of the volume energy density E1 of the battery after 50-time cycles obtained in the above test methods, compared with the volume energy density E2 of the battery after 50-time cycles in comparative embodiment 1. that is, the change rate of the volume energy density of battery=$[(E1-E2)/E2] \times 100\%$.

Table 3

| Sequence number | Sn content | Carbon content | Compaction density (g/cm$^3$) of negative electrode plate | First reversible specific capacity (mAh/g) for negative electrode active material | Volume expansion ratio of battery after 50-time cycles | Change rate of volume energy density of battery |
|---|---|---|---|---|---|---|
| Embodiment 14 | 5.31% | 93.26% | 1.04 | 542.9 | 4.3% | 2.31% |
| Embodiment 19 | 2.42% | 96.93% | 1.02 | 530.6 | 2.9% | 1.25% |
| Embodiment 20 | 9.95% | 87.37% | 1.09 | 565.8 | 12.1% | 1.96% |
| Embodiment 21 | 15.11% | 80.82% | 1.14 | 586.9 | 21.5% | 0.09% |
| Embodiment 22 | 19.88% | 74.76% | 1.20 | 607.8 | 30.2% | -1.96% |
| Comparative embodiment 1 | \ | \ | 1.00 | 510.0 | 1.0% | \ |
| Comparative embodiment 3 | 5.12% | 94.15% | 1.05 | 531.0 | 15.5% | -3.56% |

It could be seen from the test results in table 3 that with the increase of the mass percentage of the element Sn, the compaction density of the negative electrode plate and the first reversible specific capacity of the negative electrode active material both increase. However, as the volume effect of $SnO_2$ itself is large, when the content is high, the volume expansion of the lithium ion secondary battery is more obvious.

It could further be seen from the test results in table 3 that with the increase of the mass percentage of the element Sn, the volume energy density of the lithium ion secondary battery will not increase continuously. A probable reason lies in that the mass percentage of the element Sn increases, the first reversible specific capacity of the negative electrode active material is improved, but the lithium ion secondary battery will expand to different extents. Therefore, it is necessary to reasonably optimize the increase of the mass percentage of the element Sn.

Optionally, the mass percentage of the element Sn in the negative electrode active material provided by this application should not exceed 20%, and further, the mass percentage of the element Sn is 2-20%. Further, the mass percentage of the element Sn is 2-10%.

Similarly, it could further be seen from the test results in embodiment 14 and comparative embodiment 3 that in a case that the mass percentage of the element Sn is nearly the same, by comparing coating $SnO_2$ particles to the surface of the hard carbon particles with coating the hard carbon particles to the surface of $SnO_2$ particles, the volume expansion ratio of the lithium ion secondary battery prepared in the former is obviously lower.

The applicant further studies the influence of the molar ratio of stannum to oxygen in $SnO_x$ on the performance of the lithium ion secondary battery. Results are shown in table 4. The methods for preparing the lithium ion secondary battery in embodiments 23-27 are similar to that in embodiment 13, and the difference lies in that $SnO_{0.4}$, $SnO_{0.7}$, $SnO_{1.1}$, $SnO_{1.4}$, and $SnO_{1.8}$ are respectively used.

Table 4

| Sequence number | Sn content | Carbon content | Compaction density (g/cm$^3$) of negative electrode plate | First reversible specific capacity (mAh/g) for negative electrode active material | Volume expansion ratio of battery after 50-time cycles |
|---|---|---|---|---|---|
| Embodiment 13 | 5.31% | 94.69% | 1.03 | 517.9 | 5.4% |
| Embodiment 14 | 5.31% | 93.26% | 1.04 | 542.9 | 4.3% |
| Embodiment 23 | 4.95% | 94.78% | 1.04 | 520.0 | 5.3% |

(continued)

| Sequence number | Sn content | Carbon content | Compaction density (g/cm³) of negative electrode plate | First reversible specific capacity (mAh/g) for negative electrode active material | Volume expansion ratio of battery after 50-time cycles |
|---|---|---|---|---|---|
| Embodiment 24 | 5.13% | 94.39% | 1.04 | 523.1 | 4.7% |
| Embodiment 25 | 4.88% | 94.40% | 1.03 | 525.5 | 4.6% |
| Embodiment 26 | 4.98% | 94.08% | 1.04 | 529.0 | 4.5% |
| Embodiment 27 | 4.93% | 93.87% | 1.03 | 534.6 | 4.4% |

It could be seen from the test results in table 4 that in a case that the mass percentage of the element Sn is nearly same, with continuous increase of the molar content of the oxygen element in $SnO_x$, the compaction density of the negative electrode plate is nearly unchanged, the first reversible specific capacity of the negative electrode active material slightly increases, and the volume expansion ratio of the lithium ion secondary battery is slightly reduced. As probable reason lies in that with continuous increase of the molar content of the oxygen element, the theoretical gram volume of the negative electrode active material increases continuously from 990 mAh/g to 1490 mAh/g, and all contributed gram volumes increase continuously; moreover, residual oxygen element in the negative electrode active material may be reacted with lithium to generate lithium oxide which is uniformly dispersed in the first shell, which, thus, may play a role of buffering the volume expansion of the first shell to a certain extent, and therefore, the volume expansion ratio of the lithium ion secondary battery is shown slightly reduced.

The above is only the specific embodiments of this application and not intended to limit the scope of protection of this application. Any modification or substitution apparent to those skilled in the art within the technical scope disclosed by this application shall fall within the scope of protection of this application. Therefore, the scope of protection of this application shall be subject to the scope of protection of the claims.

## Claims

1.  A negative electrode active material, having a core-shell structure, wherein the negative electrode active material comprises a first shell and at least two core material particles located in the first shell; the core material comprises hard carbon; and the first shell comprises a first shell material with a volumetric specific capacity of 800 mAh/cm³ or more.

2.  The negative electrode active material according to claim 1, wherein the first shell comprises a first element capable of forming an alloy with Li, the first element comprising at least one of Sn, Si, Sb, and Ge.

3.  The negative electrode active material according to claim 2, wherein the first shell meets at least one of the following conditions (1)-(6):

    (1) based on the total mass of the negative electrode active material, the mass percentage of the first element is 2-20%;
    (2) based on the total mass of the negative electrode active material, the mass percentage of the first element is 2-10%;
    (3) The first shell material comprises at least one of a simple substance or a compound comprising the first element;
    (4) The first shell material comprises at least one of a single substance stannum, $SnO_x$, a stannum alloy, a single substance silicon, $SiO_y$, a silicon alloy, a single substance antimony, and a single substance germanium, wherein $0 < x \leq 2$ and $0 < y \leq 1.5$;
    (5) a volumetric particle size Dv50 of the first shell material is 60-500 nm; or
    (6) the volumetric particle size Dv50 of the first shell material is 60-100 nm.

4.  The negative electrode active material according to claim 1, wherein the first shell further comprises a first conductive carbon material.

5.  The negative electrode active material according to claim 4, wherein the first conductive carbon material meets at least one of the following conditions (1)-(4):

(1) the first conductive carbon material and the first shell material are uniformly mixed in the first shell;
(2) the first conductive carbon material is located on a surface of the first shell material;
(3) the first conductive carbon material comprises at least one of amorphous carbon, a carbon nanotube, graphene, and vapor deposited carbon; or
(4) based on the total mass of the negative electrode active material, the mass percentage of the first conductive carbon material is 0.5-20%.

6. The negative electrode active material according to any one of claims 1-5, wherein the negative electrode active material further comprises a second shell located on the surface of the first shell, the second shell comprising a second conductive carbon material.

7. The negative electrode active material according to claim 6, wherein the second shell meets at least one of the following conditions (1)-(3):

(1) the thickness of the second shell is 1-10 nm;
(2) the second conductive carbon material comprises at least one of amorphous carbon, a carbon nanotube, graphene, and vapor deposited carbon; or
(3) based on the total mass of the negative electrode active material, the mass percentage of the second conductive carbon material is 1-30%.

8. The negative electrode active material according to claim 1, wherein the core material meets at least one of the following conditions (1)-(5):

(1) the quantity of the core material is greater than or equal to 3;
(2) the quantity of the core material is 3-10;
(3) the pellet density of the core material under a pressure of 5 tons is 0.9-1.2 g/cm$^3$;
(4) Moh's hardness of the core material is greater than 2; or
(5) The core material has a sharp edge angle.

9. The negative electrode active material according to claim 1, wherein the negative electrode active material meets at least one of the following conditions (1)-(5):

(1) the volumetric particle size Dv50 of the negative electrode active material is 2-15 $\mu$m;
(2) the volumetric particle size Dv99 of the negative electrode active material is 10-45 $\mu$m;
(3) the first reversible specific capacity of the negative electrode active material at 0-2.0 V is 300-1200 mAh/g;
(4) based on the total mass of the negative electrode active material, the mass percentage of the carbon element is 30-98%; or
(5) based on the total mass of the negative electrode active material, the mass percentage of the carbon element is 60-98%.

10. A negative electrode plate, comprising a negative electrode current collector and a negative electrode film, wherein the negative electrode film comprises the negative electrode active material according to any one of claims 1-9.

11. The negative electrode plate according to claim 10, wherein an adhesive force between the negative electrode film and the negative electrode current collector is 9-30 N/m, and a cohesive force of the negative electrode film is 40-100 N/m.

12. An electrochemical apparatus, comprising the negative electrode plate according to claim 10 or 11.

13. The electrochemical apparatus according to claim 12, wherein a K value of the electrochemical apparatus is 0.01-2 mV/h.

14. The electrochemical apparatus according to claim 12, wherein the K value of the electrochemical apparatus is 0.01-1.4 mV/h.

15. An electronic apparatus, comprising the electrochemical apparatus according to any one of claims 12-14.

**FIG. 1**

## INTERNATIONAL SEARCH REPORT

| | International application No. |
|---|---|
| | **PCT/CN2022/083471** |

**A.　CLASSIFICATION OF SUBJECT MATTER**

　　H01M 4/36(2006.01)i;　H01M 4/38(2006.01)i;　H01M 4/583(2010.01)i;　H01M 10/0525(2010.01)i

According to International Patent Classification (IPC) or to both national classification and IPC

**B.　FIELDS SEARCHED**

Minimum documentation searched (classification system followed by classification symbols)

　　H01M

Documentation searched other than minimum documentation to the extent that such documents are included in the fields searched

Electronic data base consulted during the international search (name of data base and, where practicable, search terms used)

　　CNABS; CNTXT; CNKI; WPABS; DWPI; USTXT; WOTXT; EPTXT: 宁德时代, 宁德新能源, 负极, 阳极, 硬碳, 核, 壳, 包覆, 锡, 硅, 锑, 锗, 合金, anode, negative, hard carbon, core, shell, coat+, stannum, sn, silicon, si, stibium, sb, germanium, ge, alloy

**C.　DOCUMENTS CONSIDERED TO BE RELEVANT**

| Category* | Citation of document, with indication, where appropriate, of the relevant passages | Relevant to claim No. |
|---|---|---|
| X | CN 107768626 A (SHENZHEN BTR NEW ENERGY MATERIALS CO., LTD.) 06 March 2018 (2018-03-06)<br>description, paragraphs [0008]-[0157], and figures 1-5 | 1-15 |
| X | CN 111816856 A (SHENZHEN INSTITUTE OF ADVANCED TECHNOLOGY) 23 October 2020 (2020-10-23)<br>description, paragraphs [0005]-[0078], and figures 1-2 | 1-15 |
| X | CN 103904304 A (HUIZHOU BYD BATTERY CO., LTD.) 02 July 2014 (2014-07-02)<br>description, paragraphs [0005]-[0044], and figure 1 | 1-15 |
| X | CN 102479948 A (BYD CO., LTD.) 30 May 2012 (2012-05-30)<br>description, paragraphs [0007]-[0055], and figure 1 | 1-15 |
| A | CN 102479949 A (BYD CO., LTD.) 30 May 2012 (2012-05-30)<br>entire document | 1-15 |
| A | CN 105449182 A (BYD CO., LTD.) 30 March 2016 (2016-03-30)<br>entire document | 1-15 |

☐ Further documents are listed in the continuation of Box C.　　☑ See patent family annex.

| | |
|---|---|
| *　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| **17 October 2022** | **28 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/083471**

| Patent document cited in search report | | | Publication date (day/month/year) | Patent family member(s) | | | Publication date (day/month/year) |
|---|---|---|---|---|---|---|---|
| CN | 107768626 | A | 06 March 2018 | JP | 2020510962 | A | 09 April 2020 |
| | | | | US | 2020243846 | A1 | 30 July 2020 |
| | | | | WO | 2019063006 | A1 | 04 April 2019 |
| | | | | GB | 202006354 | D0 | 17 June 2020 |
| | | | | KR | 20200039715 | A | 16 April 2020 |
| | | | | CN | 107768626 | B | 03 December 2019 |
| | | | | EP | 3690996 | A1 | 05 August 2020 |
| | | | | EP | 3690996 | A4 | 09 June 2021 |
| | | | | JP | 6963734 | B2 | 10 November 2021 |
| | | | | KR | 102416976 | B1 | 06 July 2022 |
| CN | 111816856 | A | 23 October 2020 | WO | 2022016374 | A1 | 27 January 2022 |
| CN | 103904304 | A | 02 July 2014 | | None | | |
| CN | 102479948 | A | 30 May 2012 | US | 2013244087 | A1 | 19 September 2013 |
| | | | | EP | 2633577 | A1 | 04 September 2013 |
| | | | | WO | 2012071914 | A1 | 07 June 2012 |
| | | | | US | 9029020 | B2 | 12 May 2015 |
| | | | | CN | 102479948 | B | 02 December 2015 |
| | | | | EP | 2633577 | A4 | 24 February 2016 |
| | | | | EP | 2633577 | B1 | 17 January 2018 |
| CN | 102479949 | A | 30 May 2012 | WO | 2012071916 | A1 | 07 June 2012 |
| | | | | EP | 2633575 | A1 | 04 September 2013 |
| | | | | US | 2013252031 | A1 | 26 September 2013 |
| | | | | US | 9005812 | B2 | 14 April 2015 |
| | | | | CN | 102479949 | B | 27 May 2015 |
| | | | | EP | 2633575 | B1 | 04 October 2017 |
| CN | 105449182 | A | 30 March 2016 | CN | 105449182 | B | 27 March 2018 |

Form PCT/ISA/210 (patent family annex) (January 2015)